# EUROPEAN PATENT APPLICATION

(11) **EP 4 513 626 A1**
(43) Date of publication of application: **26.02.2025**
(21) Application number: 23193378.9
(22) Date of filing: 25.08.2023
(51) Int. Cl.: H01M 10/615, H01M 10/633, H01M 10/657, H01M 10/6571, H01M 10/667, H05K 7/20

(54) **BATTERY SYSTEM**

(71) Applicant: Rimac Technology LLC, 10431 Sveta Nedelja (HR)
(72) Inventor: Miller, Jack William, Witney, Oxfordshire, OX28 3FP (GB); Bradac, Frantisek, 69002 Breclav (CZ)
(74) Representative: Hoffmann Eitle

(57) **Abstract**

A method for controlling heating of a battery comprising battery cells and an electrical circuit, the electrical circuit being thermally coupled to a subset of the battery cells, the method comprising controlling the electrical circuit to heat the subset of battery cells by converting electrical energy supplied to operate the electrical circuit into thermal energy. A controller and a battery are also provided.

## Description

### Technical field

The present invention relates to the technical field of battery systems. More particularly, the present invention relates to the technical field of thermal management in battery systems.

### Background

Batteries are playing an increasing role in energy storage for both mobility and grid storage applications. The transition towards using renewable fuel types is driving demand for cheaper, longer lasting and more efficient types of batteries and power conversion methods.

A battery normally comprises one or more battery modules, and each battery module normally comprises one or more battery cells packed within the available space in the battery module.

Thermal management of the battery is a crucial aspect in ensuring safe operation and an extended life cycle of the battery. The thermal management includes temperature control of the battery via both heating and cooling.

Battery cells tend to have reduced performance, reduce round trip efficiency, and a higher propensity to non-reversible aging at low temperatures. Heating of the battery may be required in situations in which the temperature of the battery, influenced for example by the temperature of the surrounding environment of the battery, is disadvantageous for operation of the battery. In such situations it may be required that the battery is heated at least to the predetermined temperature above which safe operation of the battery can be guaranteed before the battery is operated.

However, heating of the battery can be energetically inefficient, which in turn reduces the overall energetic efficiency of the system in which the battery is used.

Batteries may also require cooling in order to stay within the operational temperature range during operation. The heat generated by the plurality of battery cells needs to be properly rejected from the corresponding battery module and accordingly the battery, in order that a safe operation of the battery is ensured. However, cooling of the battery also increases the energy consumption in the system leading again to a reduced overall energetic efficiency of the system.

An adequate thermal management of the battery can increase the overall energetic efficiency of the system. One method of thermal management of the battery can be the use of predictive thermal management. The predictive thermal management utilizes software-based prediction of upcoming events for which the required battery temperature window (limits) is also calculated and then the temperature of the battery is progressively controlled by heating up or cooling down the battery such that it always stays within the current and also the future temperature limits.

However, the predictive thermal management still has limitations occasioned, for example, by the accuracy of prediction of future operating conditions which in some scenarios of operation can lead to higher than optimal energy usage of the battery, reducing the overall energetic efficiency of the system in which the battery is used.

Furthermore, components introduced for the thermal management of the battery negatively affect the energetic efficient use of the battery, due to the added weight, used space, etc.

The energy efficiency of the thermal management can be further decreased by increasing the granularity of the control of battery temperature.

Hence, it is an object of the present invention to provide for an improved thermal management of a battery and hence for an improved energetic efficiency of the system in which the battery is used.

### Summary

Aspects of the present invention address, at least in part, the problems and drawbacks mentioned above.

According to a first aspect of the present invention, there is provided a method for controlling heating of a battery comprising battery cells and an electrical circuit, the electrical circuit being thermally coupled to a subset of the battery cells, the method comprising controlling the electrical circuit to heat the subset of battery cells by converting electrical energy supplied to operate the electrical circuit into thermal energy.

The electrical circuit may comprise at least one electrical/electronic element, such as a wire, signal trace, resistor, capacitor, inductor, switching element, diodes, etc. Each element may be a linear element or a non-linear element. The electrical circuit is controlled such that, when current flows through the element(s) of the electrical circuits, a part of the electrical energy is transformed into heat, for example as ohmic heating. The arrangement of the electrical circuit and the subset of battery cells forms a thermal coupling, thus causing at least a part of the heat generated in the electrical circuit to be transferred to the subset of battery cells. The method may comprise controlling the electrical circuit to increase the heat generated during an operation of the electrical circuit, thereby increasing the thermal energy transferred to the subset of battery cells.

The subset of battery cells may comprise a part of the battery cells (i.e., one or more of the battery cells, but not all). In cases where the battery comprises battery modules, a subset can correspond to one or more modules of the battery.

Preferably, the electrical circuit comprises at least one semiconductor element.

Each semiconductor element may be a diode or a switching element, namely any type of electronic element whose state can be controllably switched. For example, each switching element may be a transistor (e.g., field-effect transistors (FETs), such as metal-oxide FETs (MOSFETs) or junction-gate FETs (JFETs), bipolar junction transistors (BJTs) insulated gate bipolar transistors (IGBTs), etc.), a thyristor, etc.

Preferably, the at least one semiconductor element comprises at least one switching element, and the converting of electrical energy into thermal energy comprises driving the at least one switching element in a linear region.

Accordingly, a higher proportion of electrical energy may be transformed into thermal energy, thus improving the heating of the battery cells.

Preferably, the method further comprises determining whether to heat the subset of battery cells.

The determination of whether to heat the subset of battery cells may be understood to be a determination of whether to operate the electrical circuit to heat the subset of battery cells, or to use the electrical circuit to heat the subset of battery cells.

Accordingly, the electrical energy to be transformed into thermal energy may be provided to the electrical circuit only when required, thus improving efficiency.

Preferably, the determination is based on information about an intended operation of the battery.

Preferably, the intended operation of the battery is estimated from at least one of user input and data on past use of the battery.

Preferably, the method further comprises detecting whether thermal energy from a heat source thermally coupled to the subset of battery cells is available, wherein the electrical circuit is controlled to heat the subset of battery cells when a quantity of available thermal energy is below a threshold.

Accordingly, it is possible to determine that no thermal energy is available from the heat source, or that the available thermal energy is insufficient to heat the battery cells and use the electrical circuit to generate thermal energy only when needed.

Preferably, the quantity of thermal energy to be generated by the electrical circuit may be calculated based on the quantity of thermal energy available from the heat source (even if below the threshold).

Accordingly, the thermal energy to be generated by the electrical circuit may be reduced, even if the quantity of thermal energy from the heat source is below the threshold.

The threshold may be predetermined, or it may be determined when the detection is made (e.g., based on a current temperature of the battery when the determination is made and/or a desired temperature for the battery cells).

The heat source may be any heat source present in a system (e.g., a vehicle or building) comprising the battery (or any heat source having a permanent or semi-permanent thermal coupling with the battery). For example, the heat source may be at least one of an electric water or air heater, a heat pump, a heat exchanger obtaining heat from another source (e.g., a geothermal source, sea-water source, an internal combustion engine), etc.

Any heat source may be thermally coupled to the subset of battery cells if thermal energy from the heat source can be controllably used to heat the subset of battery cells (i.e., the heat source and the subset of battery cells need not be in direct contact).

Whilst the electrical circuit may be arranged in close proximity to the subset of battery cells, the heat source may be more distant to the subset of battery cells.

Preferably, the battery is for a vehicle or for stationary storage.

The vehicle may be an electric vehicle or a vehicle using an internal combustion engine.

The electric vehicle may be any vehicle using, as an energy source to drive the vehicle, electrical energy stored in one or more batteries, and may be defined as an electric propulsion vehicle. The electrical energy may be the sole energy source to move the vehicle (e.g., a purely electric vehicle) or may be one of multiple energy sources (e.g., a hybrid vehicle combining electric energy and another energy such as petrol, natural gas, etc.). In some cases, the battery may be for driving the electric vehicle.

In cases where the battery is for a vehicle using an internal combustion engine, the electrical energy in the battery may be used for powering electrical or electronic components of the vehicle, such as the electronic control unit, display unit(s), or powered functions in the vehicle.

In cases where the battery is for an electric vehicle, a user input used to estimate the intended operation may include, for example, one or more of the selected driving modes, an intended destination entered via the vehicle's navigation system, etc., and information on past use of the battery may include, for example, past navigation data, patterns detected in past use of the battery, etc.

Preferably, the heat source is in the electric vehicle.

In other words, the heat source forms part, or comprises element (s), of the vehicle, such as a combustion engine or a heat exchanger (e.g., a radiator).

Preferably, the method further comprises selecting between a first mode of operation of the electrical circuit and a second mode of operation of the electrical circuit, wherein the first mode is prioritizing heating the subset of battery cells; wherein the second mode is prioritizing controlling an operation of the battery; and wherein a quantity of thermal energy generated when the electrical circuit is operating in the first mode is larger than a quantity of thermal energy generated when the electrical circuit is operating in the second mode.

Accordingly, an electrical circuit already used to control an operation of the battery can be used to heat the subset of battery cells, such that no new components need to be added to the battery for the thermal management of the battery. Thus, the efficient use of the battery may be improved.

The selection between the first mode and second mode may be based on a result of a determination on whether to heat the subset of battery cells.

The first mode is (primarily) for heating the subset of battery cells, but may involve controlling an operation of the battery as well. Similarly, the second mode is (primarily) for controlling an operation of the battery, but may involve heating the subset of battery cells as well. Accordingly, the first mode may be called a heat generation mode, and the second mode may be called an operation control mode.

The quantity of thermal energy generated when the electrical circuit is operating in the first mode may be larger than the quantity of thermal energy generated when the electrical circuit is operating in the second mode because a larger portion of the electrical energy provided to the electrical circuit is converted into thermal energy and/or because a larger quantity of electrical energy is supplied to the electrical circuit in the first mode.

Preferably, no electrical power is output from the subset of battery cells when the electrical circuit is controlled to operate in the first mode.

Preferably, when operating in the first mode, the electrical circuit controls a second operation of the battery.

The second operation need not be different from the operation that occurs in the second mode (e.g., both the first mode and the second mode may be causing the same operation of the battery, such as causing the subset of battery cells to output electrical power at a given voltage, charging the battery cells, checking a state of the battery cells). In such cases, the first mode and the second mode may differ only in the proportion of electrical energy that is transformed into thermal energy.

Preferably, in the second operation, the subset of battery cells outputs electrical power.

Preferably, the electrical circuit is controlled to switch from the second mode to the first mode by changing one or more parameters of the electrical energy supplied to operate the electrical circuit.

Specifically, a value of the one or more parameters is different in the first mode and in the second mode.

Any parameter that may cause a decrease in the efficiency of the electrical circuit may be changed between the two modes, which would cause a corresponding increase in the conversion of electrical energy into thermal energy. The efficiency of the electrical circuit, in this case, may be defined as the ratio of electrical power output by the electrical circuit to the electrical power input to the electrical circuit.

Preferably, the one or more parameters include at least one of a polarity, a voltage, a current and a frequency of the electrical energy.

Preferably, the battery comprises a plurality of electrical circuits each thermally coupled to respective one or more subsets of battery cells of the battery, wherein the method comprises: determining that a number of subsets of battery cells is to be heated, controlling each of a number of electrical circuits to heat a respective one of the number of subsets of battery cells.

Each electrical circuit has a corresponding subset of battery cells. Each electrical circuit need not be electrically identical (i.e. have the same configuration and corresponding electrical components), and each electrical circuit may generate thermal energy differently. For example, one electrical circuit may switch to a heat generation mode (i.e., a first mode) by increasing a voltage level whilst another electrical circuit may switch to a heat generation mode by increasing a frequency at which a switching element switches.

Preferably, each electrical circuit is independently controllable. Accordingly, the subset of battery cells corresponding to any of the electrical circuit may be independently heated. In such cases, the electrical circuits may or may not be electrically identical to each other.

Preferably, the method comprises repeating, at a plurality of distinct time instants, the determining that a number of subsets of battery cells and the controlling each of a number of electrical circuits to heat a respective one of the number of battery cells.

The determination at each time instant may be independent from each other. Accordingly, a first number of subsets of battery cells determined at one time instant and a second number of subsets of battery cells determined at another instant may have any number of subsets in common (zero, one, many or all).

Alternatively, subset(s) that were selected in a previous determination may be excluded from a new determination. Accordingly, different subsets of battery cells may be heated at each time instant.

Preferably, the method comprises determining, at a first time instant, a first number of subsets of battery cells to be heated; controlling, from the first time instant, each of a first number of electrical circuits to heat a respective one of the first number of subset of battery cells; determining, at a second time instant later than the first time instant, a second number of subsets of battery cells to be heated; and controlling, from the second time instant, each of a second number of electrical circuits to heat a respective one of the second number of subset of battery cells.

In other words, the method may comprise determining, at the first time instant, a number of first subsets of battery cells to be heated, and controlling, from the first time instant, each of a number of first electrical circuits to heat a respective first subset of battery cells (i.e., each first electrical circuit heats a respective first subset of battery cells).

Similarly, the method may comprise determining, at the second time instant, a number of second subsets of battery cells to be heated, and controlling, from the second time instant, each of a number of second electrical circuits to heat a respective second subset of battery cells.

The controlling from the first time instant may occur for a first period of time starting at (or after) the first time instant. The first period may end at the second time instant, or another time instant before or after the second time instant. Similarly, the controlling from the second time instant may occur for a second period of time starting at (or after) the second time instant.

Each period may have a duration that is predetermined, or the determination that the corresponding number of subsets of battery cells is to be heated may comprise determining a corresponding duration (e.g., the duration may depend on the value of one or more parameters at the time of the determination, such as the number of subsets, a temperature of the battery at the time of the determination, etc.).

Preferably, the electrical circuit is for performing an operation that precedes an operation of the subset of battery cells.

Accordingly, the thermal energy generated in the electrical circuit may cause the subset of battery cells to heat and reach a desired range of temperatures, before the subset of battery cells begins the operation.

For example, the electrical circuit may be configured to perform an operation to check a state of the battery (e.g., a charge level of battery cells, a temperature in the battery cells, a normal functioning of the battery, etc.). The electrical circuit may check the state of the battery before the subset of battery cells is charged, or before electrical energy is drawn from the subset of battery cells.

Preferably, the method comprises obtaining thermal information about the battery. The thermal information may indicate a measured temperature of the battery, and in particular a measured temperature of one or more of the battery cells.

For example, the thermal information may be obtained by detecting a temperature of at least one of the battery cells such as by using a temperature sensor may be coupled to one or more (or each) battery cells in the subset.

Alternatively, the thermal information may indicate a representative temperature, such as a temperature of an environment of the battery (e.g., an ambient temperature) or a measured temperature of an element of the battery or of an element in the proximity of the battery (e.g. the temperature of one or more busbars connecting battery cells), may be obtained and used as an estimated temperature of the battery.

Preferably, the thermal information about the battery indicates the temperature of at least one of the battery cells in the subset.

Preferably, obtaining the thermal information comprises predicting the representative temperature using a predictive modelling (e.g. using a model of the battery, the subset of battery cells, a battery cell, and/or the element in the proximity of the battery such as the busbar(s)).

Preferably, the determination of whether to heat the subset of battery cells is based on the temperature of the at least one of the battery cells in the subset indicated by the thermal information.

According to a second aspect of the present invention, there is provided a controller for a battery comprising battery cells and an electrical circuit thermally coupled to a subset of the battery cells, the controller being arranged to execute the method according to the first aspect of the present invention.

According to a third aspect of the present invention, there is provided a battery comprising the controller according to the second aspect of the present invention, a plurality of battery cells and the electrical circuit.

The battery may comprise a plurality of electrical circuits, as described in connection with the first aspect above.

Preferably, the electrical circuit is thermally coupled to the subset of battery cells via an interface that is thermally conductive.

Preferably, the interface has a controllable thermal conductivity characteristic.

Accordingly, the proportion of thermal energy transferred from the electrical circuit to the subset of battery cells may be controlled by controlling the thermal conductivity of the interface.

Preferably, the interface comprises at least one of a vapor chamber, a heat pipe and a cold plate.

Preferably, a temperature of a fluid (or liquid) provided in the cold plate may be controlled, to adjust the quantity of thermal energy provided to the subset of battery cells.

Preferably, the subset of battery cells is arranged to act as a heat sink for the electrical circuit.

Accordingly, by dissipating the thermal energy, the thermal coupling with the battery cells may reduce any risk of malfunction in the electrical circuit.

According to a fourth aspect of the present invention, there is provided a computer program comprising instructions which, when executed by one or more processors, cause the one or more processor to execute the method according to the first aspect of the present invention.

Preferably, the computer program may be stored on a computer-readable storage medium.

In aspects summarized above, each electrical circuit may be provided on one or more surfaces of the subset of battery cells, or near (i.e., separated by a thermally conductive interface) the one or more surfaces.

Due to the close proximity of the electrical circuit(s) and the corresponding subset of battery cells, a larger portion of the thermal energy generated by the electrical circuit may be transferred to the subset of battery cells, in comparison to a case where the thermal energy is generated and channeled to the subset of battery cells. A thermally conductive interface may be placed between the electrical circuit the subset of battery cells.

### Brief description of the drawings

Embodiments of the present invention, which are presented for better understanding the inventive concepts, but which are not to be seen as limiting the invention, will now be described with reference to the figures in which:
- Fig. 1: shows a schematic illustration of the exemplary energy consumption distribution in a motor vehicle as an exemplary environment for applying embodiments of the present invention;
- Fig. 2: shows schematically an exemplary environment for applying embodiments of the present invention;
- Fig. 3: shows a schematic representation of a battery according to an example embodiment;
- Fig. 4: shows a schematic representation of an electrical circuit connected to a subset of battery cells according to an example embodiment;
- Fig.5: shows a schematic representation of an arrangement of a subset of battery cells and an electrical circuit according to an example embodiment;
- Fig. 6: shows processing operations performed in example embodiments;
- Fig. 7: shows processing operations performed to determine whether to heat a subset of battery cells in example embodiments;
- Fig. 8: shows processing operations performed to control an electrical circuit to heat a subset of battery cells in example embodiments;
- Fig. 9: shows a schematic representation of a battery according to an example embodiment;
- Fig.10: shows a schematic representation of an arrangement of battery cells and electrical circuits according to an example embodiment;
- Figs. 11A-11C: show schematic representation of electrical circuits connected to a subset of battery cells according to an example embodiment;

### Detailed description

Exemplary environment of a system for applying embodiments of the present invention may be a motor vehicle. The motor vehicle may be an electric vehicle (i.e., any vehicle using electric energy for propulsion), but may also be a conventional fuel-based motor vehicle using a combustion-based power for propulsion, however using one or more batteries as a motor vehicle starter battery. Each of the one or more batteries comprises one or more battery modules, each battery module comprises at least one battery cell. However, normally, each of the battery modules comprises a plurality of battery cells, densely packed within the available space in the battery module.

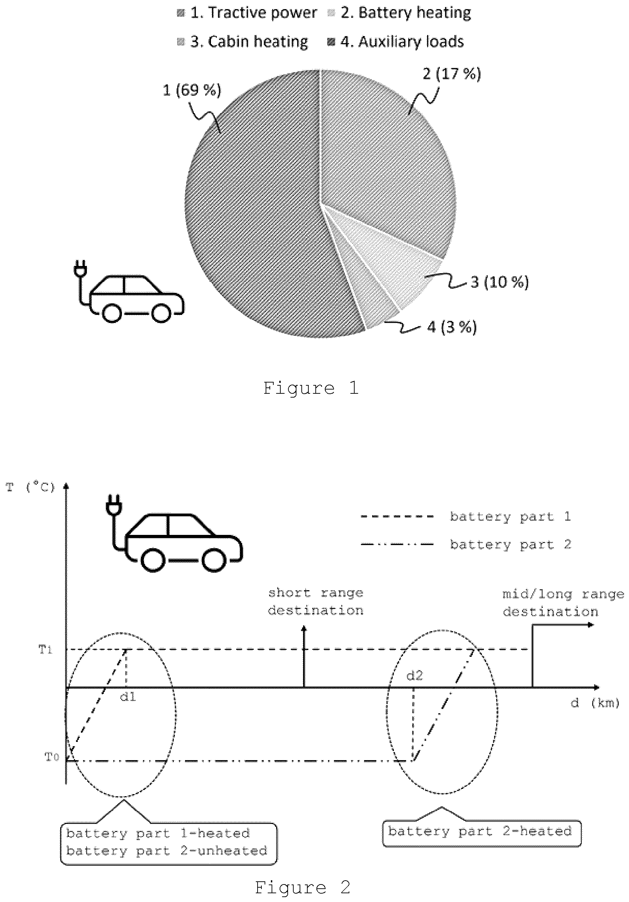

Figure 1 shows a schematic illustration of the exemplary energy consumption distribution in an electric vehicle as an exemplary environment for applying embodiments of the present invention. The electric vehicle comprises one or more batteries.

Figure 1 shows an exemplary energy consumption distribution for the electric vehicle for the case when energy is consumed for heating of the one or more batteries. Heating of the one or more batteries may be required in situations when the temperature of the one or more batteries is lower than a predetermined temperature below which safe operation of the one or more batteries cannot be guaranteed. For example, before a start of the operation of the one or more batteries (here "operation of the one or more batteries" may refer to the one or more batteries providing electrical energy for propulsion or for some auxiliary systems/loads in the electric vehicle), it may be required that the one or more batteries are heated at least up to the predetermined temperature. Further, before charging the one or more batteries, it may be required that the temperature of the one or more batteries is not lower than a predetermined temperature below which safe charging cannot be ensured.

It is shown in figure 1 that most of the energy consumption (in this example 69%) falls on the tractive energy consumption (energy consumption for propulsion). Significant part (in this example 10%) falls on energy consumption for cabin heating. A small part of the energy consumption (in this example 3%) falls on energy consumption by auxiliary loads. However, the second largest part of the energy consumption falls on energy consumption for heating the one or more batteries, in this exemplary case this part being 17%.

Heating of a battery in cold ambient conditions can use significant quantities of energy and drastically reduce the overall efficiency of the system, for example of the electric vehicle as an exemplary environment for applying embodiments of the present invention. In most electric vehicles, a resistive heater uses electrical power to warm (heat up) a liquid in a liquid cooling system to thereby transfer heat to the one or more batteries. The liquid in the liquid cooling system is normally used to cool the one or more batteries during operation of the one or more batteries if needed. In other electric vehicles, a resistive heater may be used which uses electrical power to warm (heat up) air in an air-cooling system of the one or more batteries to transfer heat to the one or more batteries.

The air-cooling system is normally used for air cooling of the one or more batteries during operation of the battery if needed.

However, a resistive heater can increase the energy consumption of the vehicle by around or even over 20% on a WLTP (World Harmonized Light Vehicle Test Cycle) or similar drive cycle. The WLTP is divided into 4 different sub-parts, each one with a different maximum speed: low, medium, high, extra-high. For low power short-range drive cycles, the energy requirements of the electric vehicle can be often met without the use of all the cells within the one or more batteries.

Furthermore, this requires transfers of energy from the resistive heater to the liquid (or other thermally conductive medium), which is then channeled to the battery cells to be heated, where another thermal transfer occurs. Each of these transfers and channeling incur a loss of energy.

Therefore, the present invention proposes heating up only a selected portion of the one or more batteries, whilst improving the efficiency of the battery heating.

For this, the present invention proposes, for a battery that comprises a plurality of battery cells, a thermal management of a subset of the battery cells to be different than a thermal management of the other part of the battery cells. Thermal management includes management of the heating of the battery. Hence the present invention proposes a selective thermal management of the battery modules.

In addition, the additional elements for the thermal management also increase the weight and space of the vehicle, which thus requires additional energy to be moved.

However, batteries comprise electrical circuits used to control an operation of the battery. For example, electrical circuits (such as integrated circuits) are used to monitor a charge level of the battery cells, to control the charge or discharge of the battery cells, to modulate the electrical energy output by the battery cells (e.g., converters, rectifiers, inverters, etc.). In operation, these electrical circuits irradiate thermal energy.

The present invention therefore proposes to utilize the thermal energy generated by such electrical circuit to heat the subset of battery cells, without requiring additional components, and thus improving the energetic efficiency of the battery.

In the following description, an electric vehicle is described as an exemplary environment for applying embodiments of the present invention, however, this is not limiting to the present invention. In other words, embodiments of the present invention may be applied to other exemplary environments as well, for example, hybrid vehicles, conventional fuel-based vehicles or different renewable energy systems. The battery may also be used as stationary storage, i.e., to store electrical energy in stationary environments such as a building, where the energy stored in the battery is used to power various functions in the building. In such environment as well, the heating of a subset of battery cells may be beneficial, e.g., if the subset of battery cells is sufficient to meet with the energy requirements.

The thermal management according to the present invention enables that only a certain part of the battery is heated up. The battery may be an AC battery or a DC battery. An AC battery comprises an energy storage part and a power electronics, for example a multilevel converter. For an AC battery, the thermal management of the battery according to the present invention enables that only a certain part of each phase of the battery is heated up or cooled down. For a DC battery, the thermal management of the battery according to the present invention enables that only a certain part of the battery is heated up or cooled down. The battery may be a single-chemistry battery but may also be a multi-chemistry battery. In a multi-chemistry battery, in one or more battery modules each of the battery cells or part of the battery cells may have a first type of battery chemistry, for example lithium-ion based battery chemistry, while in one or more other battery modules, each of the battery cells or part of the battery cells may have a different type of battery chemistry, for example, sodium-ion based battery chemistry.

The battery may also be a split-pack battery. A split-pack battery may refer to a battery pack in which multi-chemistry battery cells are arranged within a single battery housing. A split-pack battery may also refer to a battery pack that comprises battery cells arranged within multiple housings. The battery chemistry between the battery cells arranged within the different housings may be different.

The thermal management according to the present invention is particularly advantageous for situations in which, in a cold environment, a cold battery needs to be heated up to a predetermined temperature before start of operation of the battery, but at the same time the whole battery power (or the whole energetic capacity of the battery) is not required. The wording "start of operation of the battery" is to be understood as the battery being controlled to provide energy to the different systems of the electric vehicle, for example the traction system and/or auxiliary systems of the electric vehicle. Further, the thermal management according to the present invention is particularly advantageous for situations in which, in a cold environment, only a part of the battery modules of the cold battery needs to be charged, however, the temperature of the cold battery is lower than a predetermined temperature below which a safe charging cannot be ensured.

The thermal management according to the present invention is also particularly advantageous for situations in which the whole energetic capacity of the battery is not needed for operation of the electric vehicle, so that cooling down of the entire battery is not needed.

For low power short-range destinations or mid-range destinations, the power requirements of an electric vehicle can be often met without the use of all the cells within the battery. In other words, for short-range destinations or mid-range destinations, where the whole energetic capacity of the battery may not be required, heating up or cooling down of the entire battery may be energetically inefficient. According to the thermal management according to the present invention only a certain part of the battery is heated up or cooled down.

In an AC battery where power distribution between different battery modules of the battery can be reconfigured and controlled, periodization can be made to heat up or cool down only a selected portion of the battery to minimize the energy consumption.

For thermal management of the heating, for mid-range and short-range destinations, where the majority of the available energetic capacity by the battery needs to be provided, the partial heating can still be utilized. First, the heater heats up the part of the battery (the part of the battery modules, or the subset of battery cells) used for the initial part of the driving. Then, depending on whether there is some dissipated heat from the drive train (traction system) available, either it can be used for heating up the rest of the battery or the resistive heater is used to heat up the rest of the battery when the capacity is needed.

This inventive concept of the present invention is shown schematically in figure 2. For example, for a short-range destination a part of the battery may provide enough energy required for the short-range destination. Therefore, in cold environment conditions, according to the present invention, only a part of the battery (battery part 1, dashed line) is heated. The heating may occur before the drive is started or may occur at the initial phase of the drive. The temperature of battery part 1 increases gradually from value T₀ until a predetermined temperature T₁ is reached. When the predetermined temperature T1 is reached, the temperature of the heated battery part 1 is kept at a value suitable for operation of the battery, in this example at T₁. During this time, the rest of the battery (battery part 2-dashed-dotted line) is not heated. Even though figure 2 shows the temperature of battery part 2 as being T₀ during operation of battery part 1 during the drive, it is to be understood that the temperature does not necessarily remains at T₀.

If the drive is not a short drive, the energy provided by battery part 1 may not be enough for the drive. Therefore, battery part 2 is started to be heated at a time point (or distance point d2 in figure 2) at which battery part 1 still provides energy for the drive. Battery part 2 is heated at least until the predetermined temperature T₁ is reached. For the rest of the drive, the energy is provided by battery part 2 and battery part 1 or only by battery part 2.

The potential of this type of operation may be increased depending on whether the system has information about the type of drive that is intended to be performed. As an example, a very simple way to decide whether the partial heating or the full battery heating shall be activated is to use the actual driving mode, which is typically represented by values like eco, range, normal, sport, etc. In other words, based on the set mode it may be determined whether the partial heating or the full battery heating shall be activated. A more complicated way of decision making could be based on knowledge of the future route from navigation data.

For implementing the above-described thermal management, the present invention proposes a method for controlling heating of a battery comprising battery cells and an electrical circuit, the electrical circuit being thermally coupled to a subset of one or more of the battery cells, the method comprising controlling the electrical circuit to heat the subset of battery cells by converting electrical energy supplied to operate the electrical circuit into thermal energy.

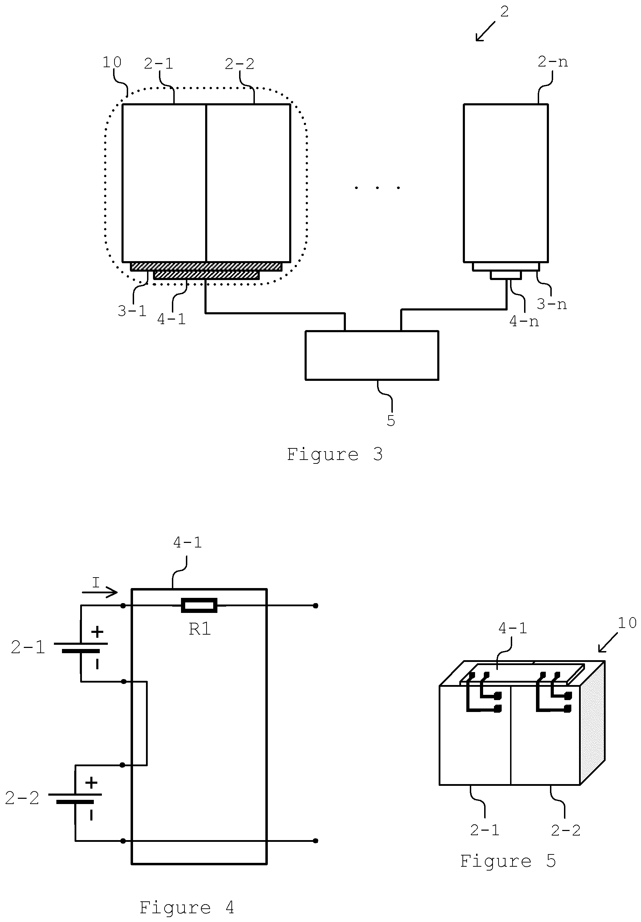

Figure 3 shows a schematic representation of a battery according to an example embodiment. It is to be understood that even though *"battery"* in singular is used, this is not limiting. As used herein, the term battery may be understood to mean a battery system comprising more than one battery.

The battery 2 comprises a number of battery cells 2-1, 2-2, ... 2-n. Each battery cell is an energy storage element. Although three battery cells are shown on Figure 3, it would be understood that the number of battery cells may be any number equal to or greater than two. Although not shown on Figure 2, the battery cells 2-1, 2-2, ... 2-n may be divided into battery modules, each module being formed by encasing battery cells in a mechanical structure. It is to be understood that other components may also be encased in the mechanical structure, for example. For example, in an AC battery, a power electronics, for example a multilevel converter, may also be encased in the mechanical structure. One or more battery modules may build a battery pack, and one or more battery packs may in turn build the battery 2.

In the example shown on Figure 3, the battery cells 2-1 and 2-2 form a subset 10. The subset 10 may correspond, for example, to a battery module (or part thereof), a plurality of battery modules, one or more battery packs, etc. The subset 10 is thermally coupled to an electrical circuit 4-1 via a thermally conductive interface 3-1.

By way of non-limiting example, the electrical circuit 4-1 is a circuit configured to monitor a current output by the battery cells 2-1 and 2-2. However, it would be understood that the electrical circuit 4-1 may be configured to perform any other function related to the battery cells. For example, the electrical circuit may check a charge level of the battery cell 2-1 and 2-2, control the amplitude of the voltage, current, a frequency, a phase, or any combination of parameters of the electrical energy generated by the battery cells 2-1 and 2-2. In yet other examples, the electrical circuit 4-1 may merely operate to heat the battery cells 2-1 and 2-2 by transforming electrical energy into thermal energy.

The battery 2 further comprises a controller 5 (or control means 5, or control system 5), electrically coupled to the electrical circuit 4-1. The controller 5 may be any suitable unit or comprise any suitable unit, such as computer processing unit, that can perform computer processing. The controller 5 (also called controller) may be for example a micro processing unit (MCU). Further, the controller 5 may comprise storage means, such as a memory (not shown in the figure). For example, the controller 5 may be a part of a Battery Management System (BMS).

The memory may also be a separate unit from the controller 5. The memory may store different information needed for the processing by the controller 5. Further, the memory may store computer program (code) comprising instructions which, when the program is executed by the controller 5, cause the controller 5 to carry out the processing (or method steps) of embodiments of the present invention.

The controller 5 controls the electrical circuit 4-1. Specifically, the controller 5 causes the electrical circuit to be provided with electrical energy to operate (as shown on Figure 3 with dashed lines). In operation, a part of the electrical energy is transformed into thermal energy. The transformation of electrical energy into thermal energy may be due to ohmic heating, switching loss (in switching elements), etc. Some of the thermal energy travels through the interface 3-1 to the battery cells 2-1 and 2-2, thereby heating the battery cells 2-1 and 2-2.

In addition, the battery cell 2-n is thermally coupled to an electrical circuit 4-n via a thermally conductive interface 3-n. The electrical circuit 4-n is also controlled by the controller 5. For brevity, details on the operation of the electrical circuit 4-n, the interface 3-n or the battery cell 2-n will be omitted, as these would become apparent from the description of the electrical circuit 4-1, the interface 3-1 and the battery cells 2-1 and 2-2 above.

In embodiments of the present invention, each thermally conductive interface 3-1, 3-n may comprise a cold plate and/or a vapor chamber. In some embodiments, the controller 5 may be configured to control a temperature of a fluid in the cold plate or the vapor chamber, to generate thermal energy to be transferred to the subset 10 of battery cells.

In embodiments of the present invention, each thermally conductive interface 3-1, 3-n and the subset 10 of battery cells may act as a heat sink drawing thermal energy away from the electrical circuit 4-1, to reduce a temperature of elements of the electrical circuit 4-1. Accordingly, fewer (or no) elements may be required to regulate the temperature of the electrical circuit and allow the electrical circuit to remain in an operational range of temperatures.

In embodiments of the present invention, the controller 5 may be configured to obtain first information about an intended operation of the battery 2. The controller 5 may be further configured to determine whether to heat the subset 10 of battery cells 2-1 and 2-2 based on the first information.

The first information may depend on the environment in which the present invention is applied. For example, when the environment in which the present invention is applied is an electric vehicle, the first information may be information enabling the controller 5 to predict the required energetic capacity of the battery 2 for the drive. In one embodiment of the present invention, the first information may be information indicating whether the driving mode set by the user is a predetermined driving mode normally used by the user. The predetermined driving mode may be set as one of eco mode, range mode, normal mode, sport mode or similar. Depending on the set driving mode different energetic capacity of the battery 2 may be required.

In a further embodiment of the present invention, the first information may be an information indicating an entered route for the drive on a navigation system or information obtained through data relating to an entered route for the drive on a navigation system. In other words, in these embodiments of the present invention, the controller 5 may be configured to control the electrical circuit 4-1 based on a first information indicating or being related to, for example, a length of a driving route.

In still other embodiments of the present invention, the first information may be information obtained based on past uses of the electric vehicle. For example, in one period of the day or the week, the user may use the electric vehicle for short range destinations, while in other period of the day or the week, the user may use the vehicle for long range destinations. As further examples, a daily, or weekly pattern of destinations, battery usage and charging may be identified by processing information on historic fluctuations in charge level of the battery over a past period (e.g., the past month, the past year, etc.).

The controller 5 may be configured to obtain the first information from another control means, from a memory, or if the controller 5 is arranged to process information related to any of the above-described examples of predetermined driving mode, entered route on a navigation system or past uses of the electric vehicle, may even be configured to obtain the information by processing the information related to any of the above-described examples of predetermined driving mode, entered route on a navigation system or past uses of the electric vehicle.

In some embodiments, first information obtained from user input and first information determined from past usage of the electrical vehicle may be combined. For example, a user input indicating an intended route may be combined with information on past battery usage for that route. By combining pieces of information, the intended operation of the battery may be more accurately estimated.

Based on the first information, the controller 5 may perform even more efficient thermal management of the battery 2.

Figure 4 shows a schematic representation of an electrical circuit comprising the subset 10 of battery cells 2-1 and 2-2, and the electrical circuit 4-1 according to an example embodiment.

As shown on Figure 4, the electrical circuit 4-1 is electrically connected to the battery cells 2-1 and 2-2, connecting these in series. The electrical circuit 4-1 may have an equivalent resistance equal to a value R₁, in series with the battery cells 2-1 and 2-2, and a load coupled to the electrical circuit 4-1 (not shown). The thermal energy generated in the electrical circuit 4-1 may be approximated as I² * R₁, where I is an electrical current generated by the battery cells 2-1 and 2-2.

Although only the equivalent resistance R1 is shown, it would be understood that the electrical circuit 4-1 may comprise any number of electric or electronic components.

Figure 5 shows a schematic representation of an arrangement of the subset 10 of battery cells 2-1 and 2-2 and the electrical circuit 4-1 according to an example embodiment.

By way of non-limiting example, the electrical circuit 4-1 shown on Figure 5 is arranged on a surface of the battery cells 2-1 and 2-2, so as to cover a major portion of the surface.

However, it would be understood that the electrical circuit 4-1 may be arranged on more than one surfaces of the battery cells 2-1 and/or 2-2. Generally, it would be understood that a greater area of contact between the electrical circuit 4-1 and the subset 10 of battery cells would improve the transfer of thermal energy.

Although not shown, the interface 3-1 is provided between the electrical circuit 4-1 and the surface of the battery cells 2-1 and 2-2.

Additionally, Figure 5 shows an electrical connection between terminals (i.e., electrodes) on the battery cells 2-1 and 2-2 and terminals on the electrical circuit 4-1.

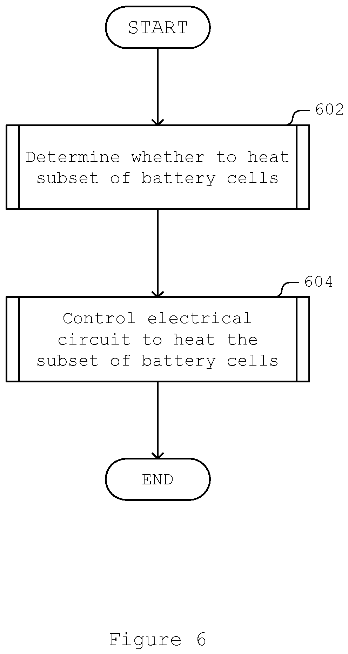

Figure 6 shows processing operations performed in example embodiments. The processing operations may be performed, for example, by the controller 5.

The processing operations may be performed upon a trigger indicating that an operation of the subset of battery cells may be required (e.g., that the subset of battery cells may be required to generate electrical energy and/or to be charged from an outside source). The trigger may be, for example at a start of the car's operation system, when an indication that the engine should be turned on is received, when an indication that the battery should begin charging, etc.

The processing operations shown on Figure 6 may also be repeated during an operation of the battery cells. Referring back to Figure 2, the processing operations shown on Figure 6 may be performed before the drive is started or at the initial phase of the drive, and again when a time instant (or distance point d2 in Figure 2) is reached.

At step 602, the controller 5 determines whether to heat the subset 10 of battery cells 2-1 and 2-2.

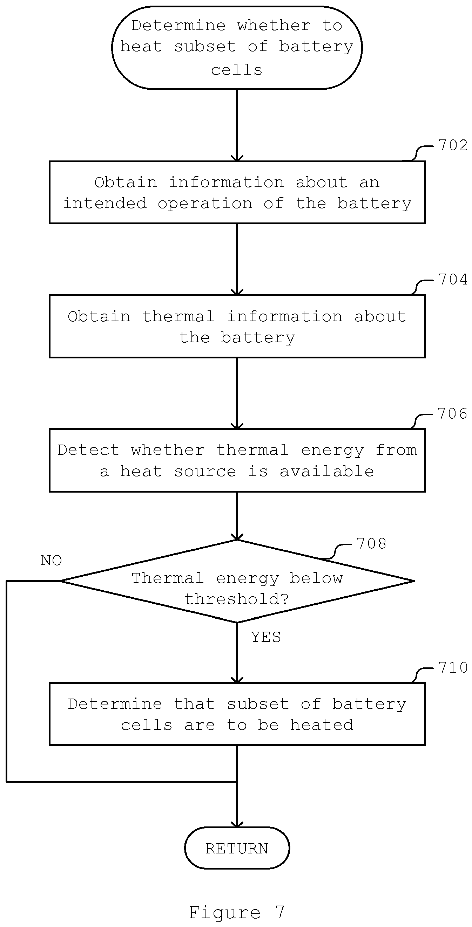

Figure 7 shows the processing operations performed by the controller 5 at step 602 to determine whether to heat the subset 10 of battery cells 2-1 and 2-2 in the present example embodiment.

Referring to Figure 7, at step 702, the controller 5 obtains information about an intended operation of the battery.

As explained above, the controller 5 obtains the information about the intended operation from at least one of user input and data on past use of the battery.

The controller 5 determines a desired temperature (or a range of temperatures) for the subset 10 of battery cells 2-1 and 2-2, based on the intended operation of the battery.

For example, the subset 10 of battery cells 2-1 and 2-2 may perform a given operation when they are at a predetermined temperature (or within a range of temperatures). Accordingly, a predetermined temperature (or range) may be set for one or more operations of the battery, such as a charge of the battery, a discharge for a short distance and/or time period, a discharge for a long distance and/or time period, etc.

The information on the predetermined temperature/range of temperature for each operation may be stored, for example, in a memory accessible to the controller 5.

At step 704, the controller 5 obtains thermal information about the battery. The thermal information indicates a measured temperature of the battery, and may in particular, indicate a current temperature of one or more of the battery cells (whether in the subset 10 or not). In the present example, the thermal information indicates a current temperature of at least one of battery cells 2-1 and 2-2 in the subset 10, measured from a temperature sensor on or near the subset 10 of battery cells.

At step 706, the controller 5 detects whether thermal energy is available from another heat source that is thermally coupled to the subset 10 of battery cells 2-1 and 2-2.

In the present exemplary embodiment, the heat source is a cooling system of the electric vehicle (e.g., a radiator cooling the engine) and/or a heater of the electric vehicle(e.g., a heater for an air conditioning system of the vehicle).

The controller 5 may detect whether the thermal energy is available by obtaining temperature information from the heat source (e.g., from temperature sensors sensing the temperature at or near the heat source), or from another controller that controls the operation of the heat source.

At step 708, the controller 5 determines whether the thermal energy available (if any) is below a threshold.

The threshold may be a predetermined threshold, for example set as the minimum value where thermal energy can be transferred from the heat source to the subset 10 of battery cells 2-1 and 2-2. Alternatively, the threshold may be determined based on the intended operation of the battery.

For example, the controller 5 may calculate a threshold based on the predetermined temperature (or range) for the intended operation of the battery. The threshold may be calculated as the minimum thermal energy required to heat the subset 10 of battery cells 2-1 and 2-2 to reach the predetermined temperature.

If the thermal energy is equal to or above the threshold (NO at step 708), processing for step 602 ends.

On the other hand, if the available thermal energy is below the threshold (YES at step 708), at step 710, the controller 5 determines that the subset 10 of battery cells 2-1 and 2-2 are to be heated using the electrical circuit 4-1. The processing for step 602 then ends.

Returning to Figure 6, after step 602, processing proceeds to step 604.

At step 604, the controller 5 controls the electrical circuit 4-1 to heat the subset 10 of battery cells, as will be explained below.

In cases where the battery comprises a plurality of electrical circuits each thermally coupled to respective one or more subsets of battery cells of the battery, the processing operations shown on Figure 6 may be performed for each subset of battery cells. For example, parallel processing operations may be performed for each subset, or the processing operations may be performed for each subset sequentially.

For example, the controller 5 may perform, at a first time instant, the processing operations of step 602 for each subset. As a result of this processing, the controller 5 may determine that a number k₁ of the subsets of battery cells are to be heated. Each of the k₁ subsets of battery cells are thermally coupled to one of a number l₁ of electrical circuits (such as the electrical circuit 4-1).

Then, the controller 5 performs the processing operations of step 604 for each of the l₁ electrical circuits to cause the l₁ electric circuits to heat the k₁ subsets of battery cells.

The controller 5 may cause the l₁ electrical circuits to operate for a predetermined duration after the first time instant, or until the controller 5 makes a new determination of subset(s) to heat.

Then, the controller 5 may perform at a second time instant later than the first time instant, the processing operations of step 602 for each subset of the battery (or for each subset of the battery that is not included in the k1 subsets of battery cells) . As a result of this processing, the controller 5 may determine that a number k₂ of the subsets of battery cells are to be heated. Each of the k₂ subsets of battery cells are thermally coupled to one of a number l₂ of electrical circuits.

The controller 5 then performs the processing operations of step 604 for each of the l₂ electrical circuits to cause the l₂ electrical circuits to heat the k₂ subsets of battery cells.

This may be repeated for any number of time instants. In the above example, k₂, l₁, k₂ and l₂ can be any integer number satisfying the equation: 0 < l₁ ≤ k₁ and 0 < l₂ ≤ k₂.

One or more subsets of battery cells may belong to both the k₁ subsets of battery cells and the k₂ subsets of battery cells, or these groups may have no subset in common.

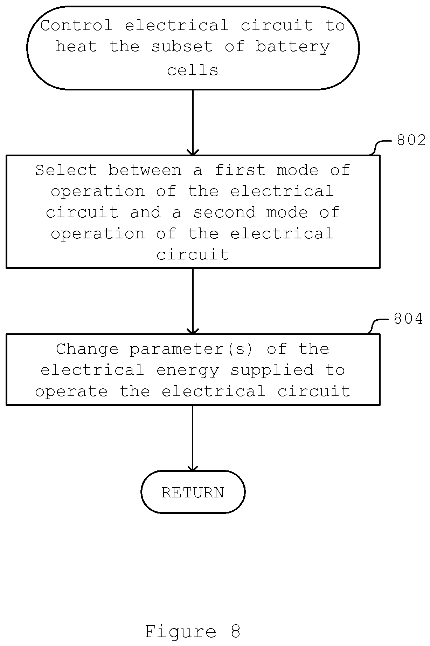

Figure 8 shows the processing operations performed by the controller 5 at step 604 to control the electrical circuit 4-1 to heat the subset 10 of battery cells 2-1 and 2-2 in the present example embodiment.

Referring now to Figure 8, at step 802, the controller 5 selects between a first mode of operation of the electrical circuit 4-1 and a second mode of operation of the electrical circuit 4-1.

The two modes of operation of the electrical circuit 4-1 differ in the quantity of thermal energy that is then transferred to the subset 10. In the first mode of operation, a larger quantity of thermal energy is generated than in the second mode.

In the present example, in the second mode, the electrical circuit 4-1 only generates a negligible quantity of thermal energy, and thus does not have a substantial impact on the temperature of the subset 10 of battery cells 2-1 and 2-2.

The controller 5 selects between the two modes of operation based on whether it was determined (at step 710) to heat the subset 10 of battery cells 2-1 and 2-2 using the electrical circuit 4-1. Specifically, if at step 710, the controller determined that the subset 10 should be heated using the electrical circuit 4-1, the controller 5 selects the first mode. On the other hand, if at step 710, the controller 5 determined that the subset 10 need not be heated using the electrical circuit 4-1, the controller selects the second mode.

Then, at step 804, the controller 5 changes one or more parameters of the electrical energy supplied to the electrical circuit 4-1 to operate the electrical circuit 4-1. The electrical energy may be supplied from the subset 10 of battery cells 2-1 and 2-2, or it may be supplied from another source (e.g., other battery cells of the battery 2, or a separate electrical source) .

For example, the parameters may include at least one of a polarity of a voltage applied to the electrical circuit 4-1, a voltage (i.e., an amplitude of the voltage), an amplitude of a current supplied to the electrical circuit 4-1, and a frequency of the electrical energy.

In the present example, in the second mode, the electrical circuit 4-1 has an equivalent resistance equal to a value R₂, which is much smaller than the value R₁. By way of non-limiting examples, the value R₁ may be equal to 1000 Q whereas the value R₂ may be 10 Q.

The processing for step 604 then ends.

The above-described embodiment of the present invention enables therefore that efficient thermal management of the battery 2 is performed and hence the energetic efficiency of the system in which the battery is used is improved.

### Modifications and variations

Although detailed embodiments have been described, these only serve to provide a better understanding of the invention defined by the independent claims and are not to be seen as limiting.

Many modifications and variations can be made to the example embodiments described above.

For example, although Figure 3 shows battery cells that are coupled to electrical circuits via thermally conductive interfaces 3-1 and 3-n, the embodiments are not limited in this aspect. The interfaces 3-1 and 3-n may be omitted, for example in case the arrangement of the electrical circuits 4-1 and 4-n, and the corresponding subset of battery cells allows for thermal energy to be transferred from the electrical circuit to the battery cells.

Additionally, the subset 10 of battery cells need not be coupled to a single interface 3-1 and a single electrical circuit 4-1 as shown on Figure 3.

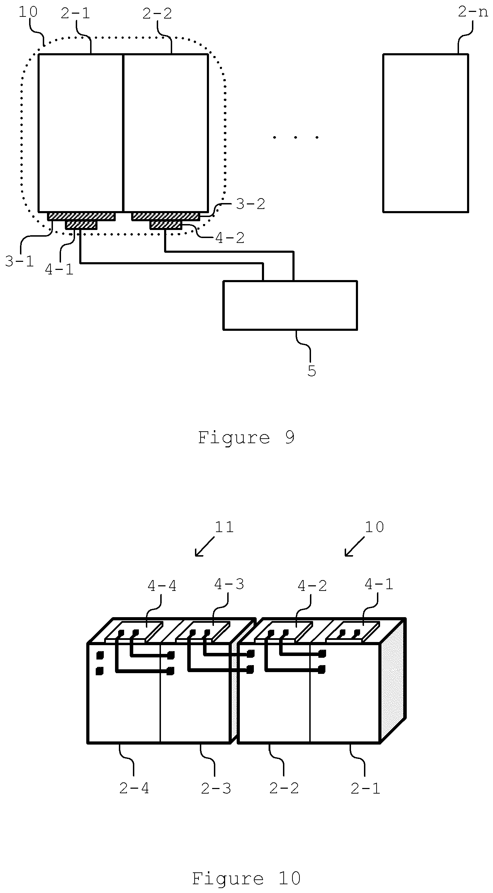

Instead, as shown on Figure 9, battery cells 2-1 and 2-2 of the subset 10 may have a respective thermally conductive interface 3-1 and 3-2, and/or a respective electrical circuit 4-1 and 4-2. More generally, in a subset of battery cells any number of battery cells may be coupled to a thermally conductive interface and/or to an electrical circuit. The number of thermally conductive interface need not correspond to the number of electrical circuits coupled to battery cells of the subset.

Still as shown on Figure 9, not all of the battery cells of the battery need to be coupled to an electrical circuit for heating the battery cells. For example, interface 3-n and electrical circuit 4-n may be omitted.

More generally, the subset 10 of battery cells may comprise a number n of battery cells, and a number m of electrical circuits may be thermally coupled to respective battery cells of the subset 10, where m and n are integer numbers satisfying the equation 0 < m ≤ n.

In some embodiments, a single interface may be arranged to be coupled with all subsets of the battery (e.g. the entire battery), instead of having separate interfaces with each subset of battery cells. For example, referring again to Figure 3, the interface 3-1 and the interface 3-n could be a single interface in contact with all battery cells 2-1 to 2-n.

In some embodiments, electrical circuit(s) may be thermally coupled to more than one subset of battery cells. Accordingly, the operation of that (or those) electrical circuit may simultaneously heat multiple subsets of battery cells.

Although in the examples shown on Figures 4 and 5, the electrical circuit 4-1 is both thermally coupled and (electrically) connected to the same battery cells 2-1 and 2-2, the embodiments are not limited in this aspect.

For example, as shown on Figure 10, an electrical circuit 4-2 may be electrically connected to terminals of a first battery cell 2-1 and thermally coupled to a second battery cell 2-2. Similarly, an electrical circuit 4-3 may be electrically connected to terminals of the battery cell 2-2 and thermally coupled to a third battery cell 2-3. In these cases, the electrical circuits 4-2 and 4-1 may be thermally coupled and electrically connected to battery cells in a same subset (e.g., the first battery cell 2-1 and the second battery cell 2-2 may form a subset 10) or in different subsets (e.g., the second battery cell 2-2 may form part of a first subset 10 and the third battery cell may form part of a second subset 11).

Accordingly, each battery cell may be heated before they operate. For example, the first battery cell 2-1, the second battery cell 2-2 and the third battery cell 2-3 may be operated over successive periods (with or without overlaps between the periods). In a first period, as the first battery cell 2-1 operates, the electrical circuit 4-2 generates thermal energy that heats the second battery cell 2-2. Thus, the second battery cell 2-2 begins operation in a second period with a higher temperature. Similarly, during the second period, the electrical circuit 4-3 generates thermal energy that heats the third battery cell 2-3. Accordingly, when the third battery cell 2-3 begins operation in a third period, it does so with a higher temperature.

In examples described above, the electrical circuit 4-1 has been described in connection with the equivalent resistance. However, it would be understood that the electrical circuit 4-1 may have any number of electrical or electronic elements, which may depend on the function of the electrical circuit 4-1.

In cases where the battery comprises a plurality of electrical circuits each thermally coupled to respective one or more subsets of battery cells of the battery, each electrical circuit may be coupled to a same number of respective subsets of battery cells (e.g. each electrical circuit is coupled to 1 or 2 subsets) or the number of respective subsets of battery cells may differ for each electrical circuit (e.g. a first electrical circuit may be coupled to a first subset of battery cells, a second electrical circuit may be coupled to second and third subsets of battery cells, where the first, second and third subsets are different from each other).

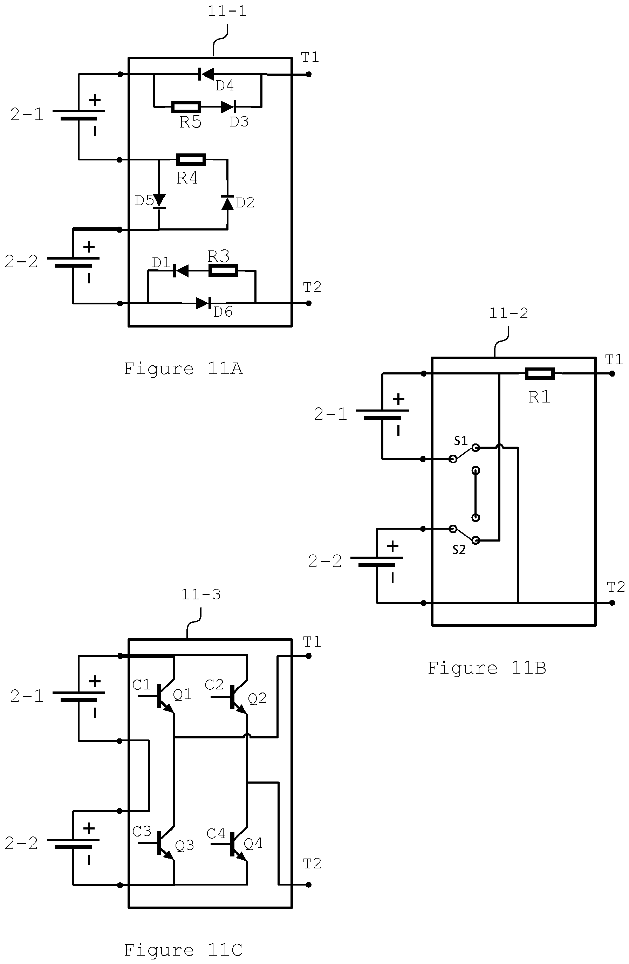

Various examples of electrical circuits that may be thermally coupled to the subset 10 of battery cells 2-1 and 2-2 will now be described, with reference to Figures 11A to 11C.

Referring now to Figure 11A, a first example of an electrical circuit 11-1 is shown. The electrical circuit is configured to operate in a first mode or in a second mode, depending on the polarity of the voltage or current applied to the electrical circuit.

Specifically, the electrical circuit 11-1 can operate in a first mode when a load is connected between terminals T1 and T2 of the electrical circuit 11-1. In that case, the voltage generated by the battery cells 2-1 and 2-2, which are connected in series, flow from terminal T2 through the resistor R3, the diode D1, the battery cell 2-2, the diode D2, the resistor R4, the battery cell 2-1, the resistor R5 and the diode D3. Accordingly, the equivalent resistance R1 shown on Figure 4 may correspond to the sum of resistance of R3, R4, R5, the inherent resistance of the diodes D1, D2 and D3, and the inherent resistance of the battery cells 2-1 and 2-2.

The electrical circuit 11-1 can also operate in a second mode, when a positive voltage is applied between the terminals T1 and T2 of the electrical circuit 11-1 (i.e., the voltage at the terminal T1 is higher than at terminal T2), for example when the battery cells 2-1 and 2-2 are being charged. In such case, an electric current from terminal T1 to terminal T2 through the diode D4, the battery cell 2-1, the diode D5, the battery cell 2-2 and the diode D6. The equivalent resistance of the electrical circuit R1 would correspond to the inherent resistance of the battery cells 2-1 and 2-2 and the inherent resistance of the diodes D4, D5 and D6.

Accordingly, the quantity of thermal energy generated in the electrical circuit 11-1 operating in the second mode may be much lower (and even negligible) compared to the quantity of thermal energy generated in the electrical circuit 11-1 operating in the first mode.

Although the battery cells 2-1 and 2-2 are shown on Figures 4 and 11A to be connected by the electrical circuit in series, the embodiments are not limited in this aspect.

For example, as shown on Figure 11B, an electrical circuit 11-2 may connect the battery cells 2-1 and 2-2 in parallel to each other. As shown on Figure 11B, the connection between the battery cells 2-1 and 2-2 can be controllably switched between a parallel connection and a series connection, by way of switching elements S1 and S2.

By changing the connection between the battery cells 2-1 and 2-2, the amplitude of the voltage across the equivalent resistance R1 may be varied, thus causing a change in the quantity of thermal energy generated in the electrical circuit 11-2.

Figure 11C shows an electrical circuit 11-3 comprising an H-bridge converter, with four switching elements Q1, Q2, Q3 and Q4. Although Figure 11C shows the switching elements to be BJTs, it would be understood that any other switching elements, such as FETs, may be used instead. The state of switching elements Q1, Q2, Q3 and Q4 are controlled by control signals C1, C2, C3 and C4, respectively, which are generated by the controller 5. Alternatively, the controller 5 may control a separate signal generator, such as a pulse-width modulation (PWM) signal generator, to generate control signals C1 to C4. By controlling the state of the switching elements Q1 to Q4, the controller 5 cause the electrical circuit 11-3 to produce an AC voltage waveform between terminals T1 and T2. For brevity, details on the operation of converters or PWM signal generation will not be described here.

However, it would be understood that generally, the switching elements Q1 and Q4 form a first pair and the switching elements Q2 and Q3 form a second pair, where each pair operate over alternating periods when a load is connected between terminals T1 and T2. Specifically, current flows from the positive terminal of battery cell 2-1 to the negative terminal of battery cell 2-2, through the switching element Q1 and Q4 in a first period, and through the switching elements Q2 and Q3 in a second period.

The controller 5 may cause the electrical circuit 11-3 to operate in either a first mode or a second mode by modifying the control signals C1 to C4. In operation, the switching elements Q1 to Q4 generate thermal energy due to switching losses, ohmic heating, etc.

As a first example, in a first mode, the controller 5 may cause the control signals C1 to C4 to switch at a first frequency, and in a second mode, the controller 5 may cause the control signals C1 to C4 to switch at a second frequency lower than the first frequency. As switching losses occurring in the elements Q1 to Q4 depend on the switching frequency, the quantity of thermal energy generated in the switching elements Q1 to Q4 in the first mode (when switching at the higher frequency) is higher than the quantity of thermal energy generated in the switching elements Q1 to Q4 in the second mode.

As a second example, the controller 5 may cause the switching elements Q1 to Q4 to operate in a symmetric switching mode in the first mode (where both switching elements of a pair are repeatedly switched on and off during the corresponding period), and in an asymmetric switching method in the second mode (where only one of the switching elements in a pair is repeatedly switched on and off during the corresponding period). Accordingly, in the first mode, switching losses occurs in both switching elements of a pair whereas in the second mode, the switching losses occur in only one of the switching elements of the pair. As a result, the switching losses and the resulting quantity of thermal energy is higher in the first mode than in the second mode.

As a third example, the controller 5 may cause the switching elements Q1 to Q4 to operate (i.e., the controller may drive the switching elements) in a linear region in the first mode, and in a saturation region in the second mode, by controlling the voltage level applied as the control signals C1 to C4. As a result, a higher quantity of thermal energy may be generated in the first mode than in the second mode.

It would be understood that any combination of the first, second and third examples described above may be used instead, to further differentiate the respective quantities of thermal energy generated in the first mode and in the second mode of the electrical circuit 11-3.

In any of the above examples, it would be understood that, although the first mode is prioritizing heating the subset of battery cells and the second mode is prioritizing controlling an operation of the battery, the electrical circuit 11-3 operating in the first mode may still control an operation of the battery, and in the second mode, the electrical circuit 11-3 may still generate thermal energy to heat the electrical subset.

However, in some embodiments, in the first mode, the electrical circuit 11-3 does not control an operation of the battery, and in the second mode, the electrical circuit 11-3 does not heat the subset of battery cells (or produce a negligible thermal effect) .

In some embodiments, the processing operations for determining whether to heat the subset of battery cells, as explained with reference to Figure 6, step 602 and to the Figure 7, may be omitted. This may be, for example, in cases where all operations of the battery require the electrical circuit to heat the subset of battery cells.

In some embodiments, the processing operations of step 702 may be omitted, as the controller 5 need not obtain or process the first information, in order to determine whether to heat the subset 10 of battery cells 2-1 and 2-2. For example, the controller 5 may be configured to control the subset 10 of battery cells 2-1 and 2-2 to heat before or at an initial phase of each operation of the battery.

Although such cases may cause the battery cells in the subset 10 to be used more frequently than other battery cells in the battery, any difference in use of battery cells may be mitigated, for example by causing the other battery cells to be used more than the battery cells in the subset 10 during longer operations.

In some embodiments, the processing operations of steps 706 and 708 may be omitted, for example if there are no heat source that are thermally coupled to the battery cells.

In some embodiments, the controller 5 may, when detecting a first quantity of thermal energy that is available from another source at step 706, calculate a second quantity of thermal energy to be generated from the electrical circuit to heat the subset of battery cells. The second quantity of thermal energy may depend on the first quantity of thermal energy. For example, a combination (e.g., a sum or weighted sum) of the first quantity and the second quantity may be calculated to be at least equal to a third quantity required for the temperature of the subset of battery cells to increase from a current temperature to a desired temperature (or range of temperatures) for the subset of battery cells.

In some embodiments, the electrical circuit 4-1 may have a single mode of operation to heat the subset 10 of battery cells. In such cases, the processing operations of steps 802 and 804 may be replaced by the controller 5 causing the electrical circuit 4-1 to begin operation (to heat the subset 10 of battery cells) or stop operation.

## Claims

1. A method for controlling heating of a battery comprising battery cells and an electrical circuit, the electrical circuit being thermally coupled to a subset of the battery cells, the method comprising:
controlling the electrical circuit to heat the subset of battery cells by converting electrical energy supplied to operate the electrical circuit into thermal energy.

2. The method according to claim 1, wherein
the electrical circuit comprises at least one semiconductor element;
optionally, the at least one semiconductor element comprises at least one switching element, and the converting of electrical energy into thermal energy comprises driving the at least one switching element in a linear region.

3. The method according to claim 1 or claim 2, further comprising:
determining whether to heat the subset of battery cells.

4. The method according to claim 3, wherein the determination is based on information about an intended operation of the battery,
wherein, optionally, the intended operation of the battery is estimated from at least one of user input and data on past use of the battery.

5. The method according to any of claim 1 to 4, wherein the method further comprises:
detecting whether thermal energy from a heat source thermally coupled to the subset of battery cells is available,
wherein the electrical circuit is controlled to heat the subset of battery cells when a quantity of available thermal energy is below a threshold.

6. The method according to any of claims 1 to 5, wherein, the battery is for a vehicle or for stationary storage.

7. The method according to any of claim 1 to 6, further comprising:
selecting between a first mode of operation of the electrical circuit and a second mode of operation of the electrical circuit,
wherein the first mode is prioritizing heating the subset of battery cells;
wherein the second mode is prioritizing controlling an operation of the battery; and
wherein a quantity of thermal energy generated when the electrical circuit is operating in the first mode is larger than a quantity of thermal energy generated when the electrical circuit is operating in the second mode.

8. The method according to claim 7, wherein no electrical power is output from the subset of battery cells when the electrical circuit is controlled to operate in the first mode.

9. The method according to claim 7, wherein, when operating in the first mode, the electrical circuit controls a second operation of the battery, and,
optionally, in the second operation, the subset of battery cells outputs electrical power.

10. The method according to any of claim 7 to 9, wherein the electrical circuit is controlled to switch from the second mode to the first mode by changing one or more parameters of the electrical energy supplied to operate the electrical circuit,
optionally, the one or more parameters include at least one of a polarity, a voltage, a current and a frequency of the electrical energy.

11. The method according to any of claim 1 to 10, wherein the battery comprises a plurality of electrical circuits each thermally coupled to respective one or more subsets of battery cells of the battery,
wherein the method comprises:
determining that a number of subsets of battery cells is to be heated,
controlling each of a number of electrical circuits to heat a respective one of the number of subsets of battery cells.

12. The method according to claim 11, wherein the method comprises:
determining, at a first time instant, a first number of subsets of battery cells to be heated;
controlling, from the first time instant, each of a first number of electrical circuits to heat a respective one of the first number of subset of battery cells;
determining, at a second time instant later than the first time instant, a second number of subsets of battery cells to be heated; and
controlling, from the second time instant, each of a second number of electrical circuits to heat a respective one of the second number of subset of battery cells.

13. A controller for a battery comprising battery cells and an electrical circuit thermally coupled to a subset of the battery cells, the controller being arranged to execute the method according to any of claims 1 to 12.

14. A battery comprising:
the controller according to claim 13;
the plurality of battery cells; and
the electrical circuit.

15. The battery according to claim 14, wherein the electrical circuit is thermally coupled to the subset of battery cells via an interface that is thermally conductive.

16. The battery according to claim 15, wherein the interface has a controllable thermal conductivity characteristic.

17. The battery according to claim 16, wherein the interface comprises at least one of a vapor chamber, a heat pipe and a cold plate,
wherein, optionally, a temperature of a fluid provided in the cold plate may be controlled, to adjust the quantity of thermal energy provided to the subset of battery cells.

18. The battery according to any of claims 14 to 17, wherein the subset of battery cells is arranged to act as a heat sink for the electrical circuit.
